# EUROPEAN PATENT APPLICATION

(11) **EP 1 249 197 A1**
(43) Date of publication of application: **16.10.2002**
(21) Application number: 02005741.0
(22) Date of filing: 13.03.2002
(51) Int. Cl.: A47J 37/08

(54) **Toaster**

(30) Priority: 13.04.2001 IT GE010036
(71) Applicant: Ariete S.p.A., 59100 Prato (IT)
(72) Inventor: Rosa, Carlo, 23900 Lecco (IT)
(74) Representative: Porsia, Attilio, Dr.

(57) **Abstract**

Electric toaster comprising an essentially boxlike body (1) with at least one opening (211) communicating with a toasting chamber (201) equipped with heating means (401,501), and means for inserting and removing (102,2,402) the product to be toasted; the said aperture (211) is made in a side wall of the said boxlike body (1)

## Description

The present invention relates to electric toasters, and relates in particular to electric toasters of the type that have one or more toasting chambers in which the products to be toasted, such as slices of bread, sandwiches or the like are placed in the grids provided.

This type of toaster normally consists of a boxlike body with one or more openings on the top face each communicating with a corresponding toasting chamber. The toasting chambers have heating means, usually electrical resistors, placed against their side walls. Grids are inserted in the openings to support the product to be toasted: they normally have jaw means to grip the product and enable it to be inserted into and removed from the toasting chamber. Well established as this type of toaster is, it nonetheless has several disadvantages.

In the first place, the toasting chamber is difficult to get at for cleaning purposes, and tends to become fouled with crumbs or melted spreads such as butter and/or cheese which are then difficult to remove. A partial solution to this problem is represented by the sort of toaster that has a pull-out crumb drawer forming the bottom wall of the toasting chamber. The value of this solution is more theoretical than practical, and it also makes the apparatus more complicated without conferring proportionate advantages.

Another problem is the fact that the opening at the top of the toasting chamber allows a large amount of heat to escape, thus wasting a considerable quantity of energy. In order to reduce this problem it has been proposed that at least some of the heat escaping through the opening be exploited by placing a grid on top of it on which other products can be cooked or warmed. However, the products placed inside the toasting chamber must still be removed through this opening, so the additional grid constitutes a virtual obstruction to the opening giving access to the toasting chamber. The advantages of its use are thereby reduced.

It is an object of the present invention to provide a toaster that maximizes accessibility to the toasting chamber and reduces the possibility of crumbs and the like remaining in the said chamber. Another object of the invention is to reduce heat wastage by always allowing an additional external grid to be used for cooking or warming food using the heat produced by the said chamber, but without creating problems of accessibility or obstruction to the user.

The subject of the present invention is therefore a toaster comprising a boxlike body with at least one opening communicating with a toasting chamber equipped with heating means, and means for inserting and removing the product to be toasted, which toaster is characterized in that the said aperture is made in a side wall of the said boxlike body. The means for inserting and removing the product to be toasted may be supported by a drawer member that fits through the said opening.

The present invention also relates to a toaster of the type described above, in which the top wall of the said toasting chamber has one or more openings communicating with the exterior, a removable tray whose surface is provided with a plurality of slots being placed on the corresponding face of the said boxlike body.

Further advantages and features of the device according to the present invention will be made clear in the following detailed description of an embodiment thereof, provided by way of non-limiting example, with reference to the attached plates of drawings, in which:
Figure 1 is a longitudinal section through the toaster of the present invention;
Figure 2 is a section on II-II as marked in Figure 1;
Figure 3 is a section on III-III as marked in Figure 1;
Figure 4 is an enlarged section on IV-IV as marked in Figure 1, with the means for inserting and removing the product to be toasted illustrated in the closed position;
Figure 5 is a view similar to that of Figure 4, but with the means for inserting and removing the product to be toasted illustrated in the open position;
Figure 6 is an end view of the toaster shown in Figure 1; and
Figure 7 is a plan view from above of the toaster shown in Figure 1.

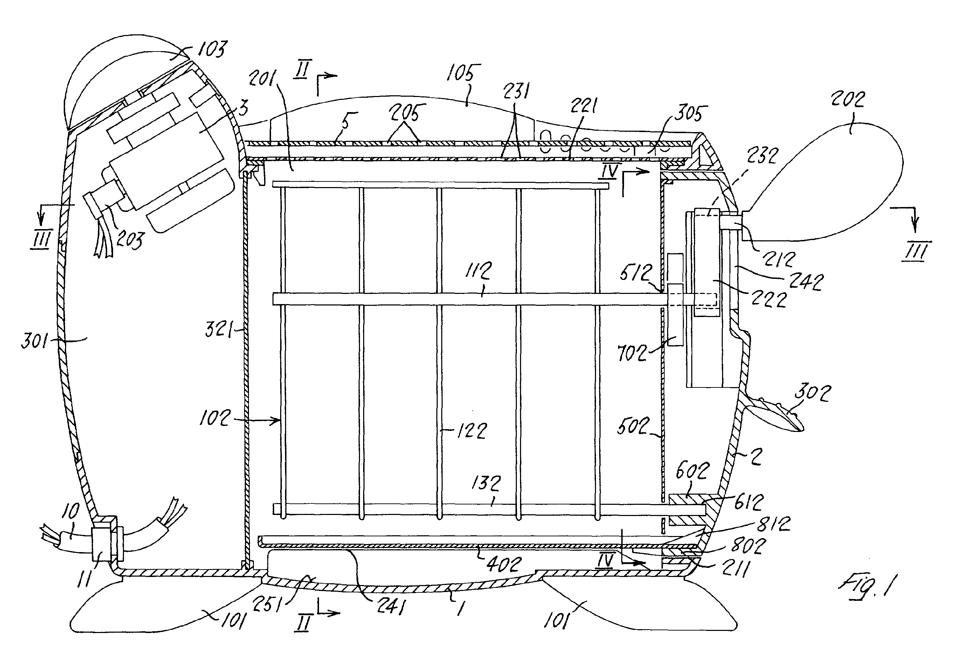

Figure 1 shows the toaster of the present invention, the reference 1 denoting the boxlike body of the said toaster. Formed inside the said boxlike body 1 is the toasting cavity 201 equipped with heating means, not shown in the figure and described in more detail later. This cavity includes, on one of the side walls of the boxlike body, the opening 211, through which the means are inserted for inserting and removing the products to be toasted. These means comprise the pairs of jaws 102 formed by the arm 112 to which are connected the grid components 122 which at the other end join a bottom bar 132. One end of the latter is inserted in the hole 612 in the sleeve 602 projecting from the sliding wall 2. The arm 112 extends through the slot 512 in the partition 502 of the sliding wall 2. The connecting link 702 is attached to the inside of the said wall and its end is inserted in the cam guide 232 of the plate 222 integral with the knob 202 via the rod 212, which slides in the channel 242. The tray 402 rests on the flanges 241 projecting from the bottom wall 251 of the chamber 201, and its end nearest the sliding wall 2 is held against the peripheral edge 802 of this wall by the flanges 812 which also project from the said wall.

In the top wall 221 of the chamber 201 are a series of holes 231 that place the said chamber in communication with the exterior. A tray 5 containing slots 205 is placed on the outer face of the top wall 221 of the chamber 201. This tray is given handle means 105 and supporting feet 305.

The toasting chamber 201 is separated by the side wall 321 from the chamber 301 containing the timer switch 3. The timer switch 3 is provided with a control knob 103 extending out of the boxlike body 1, and is connected by the connector 203 to the lead 10, which passes out through the cable guide 11.

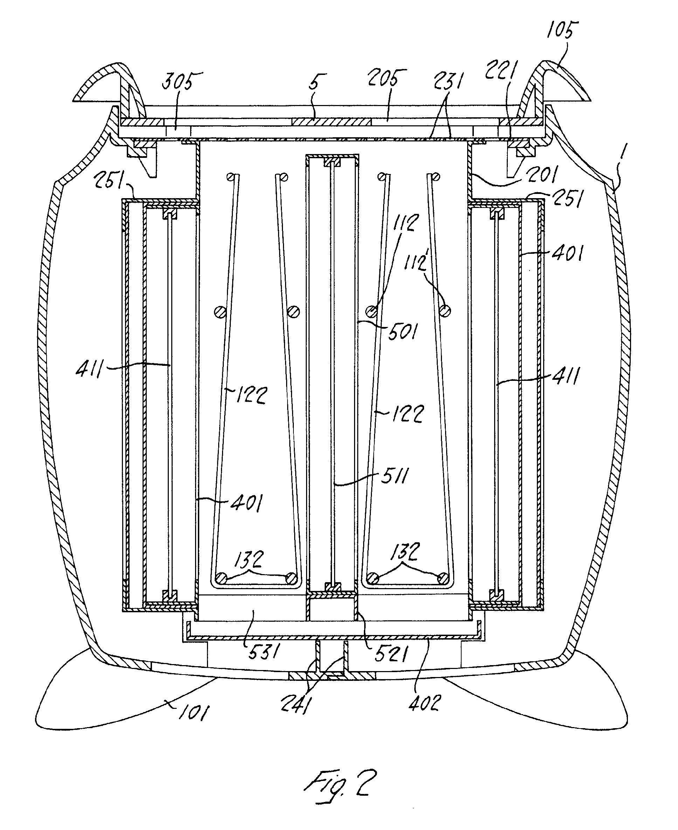

In Figure 2 the apparatus of the invention is illustrated in section and identical parts are given the same numbers. The figure shows the heating means of the toasting chamber 201, which were not illustrated in the figure described above, and which consist of the side heating plates 401 (inserted in the spaces 251 of the sides of the chamber 201) and the central plate 501 (connected by the channel 521 and crossmembers 531 to the walls of the chamber 201). The side plates 401 and the central plate 501 have corresponding resistors 411 and 511. It is also possible to see the generally trapezoidal shape of the grid components 122 of the pairs of jaws 102, which allows them to grip the product to be toasted inside the chamber 201. Each pair of jaws has an inner arm 112 next to the inner plate 501, and an outer arm 112'.

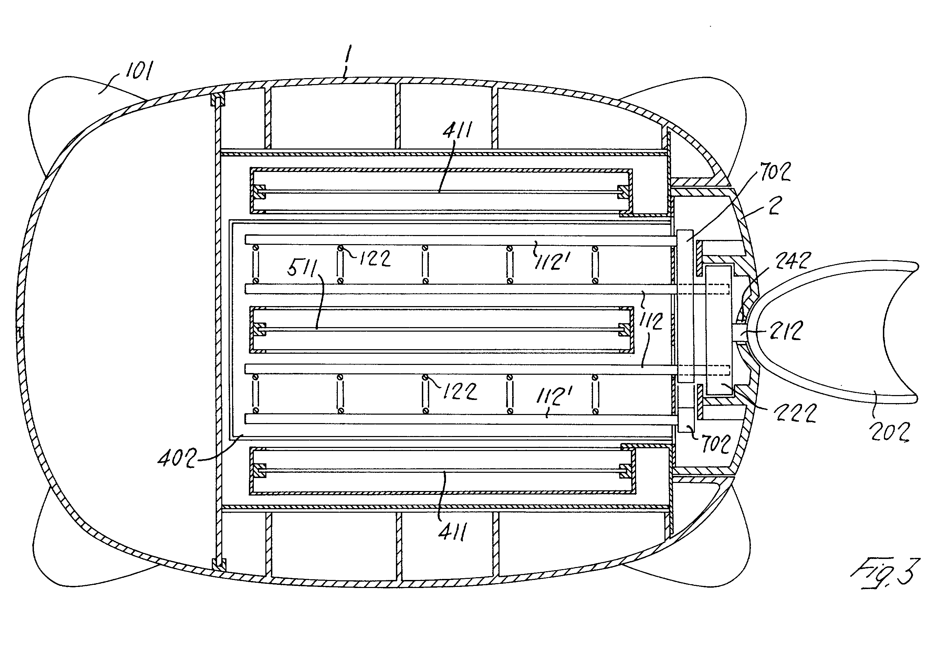

In Figure 3 the toaster of the invention is illustrated in section taken on III-III as marked in Figure 1, and identical parts are given the same numbers. The figure explains the positioning of the pairs of jaws 102: each pair of jaws 102 has its outer arm 112' connected to the inner arm 112 of the other pair of jaws by a respective connecting link 702. Towards the sliding wall 2, the ends of both the inner arms 112 of the two pairs of jaws 102 are inserted through the cam guides (not shown in the figure, see Fig.1) of the plate 222.

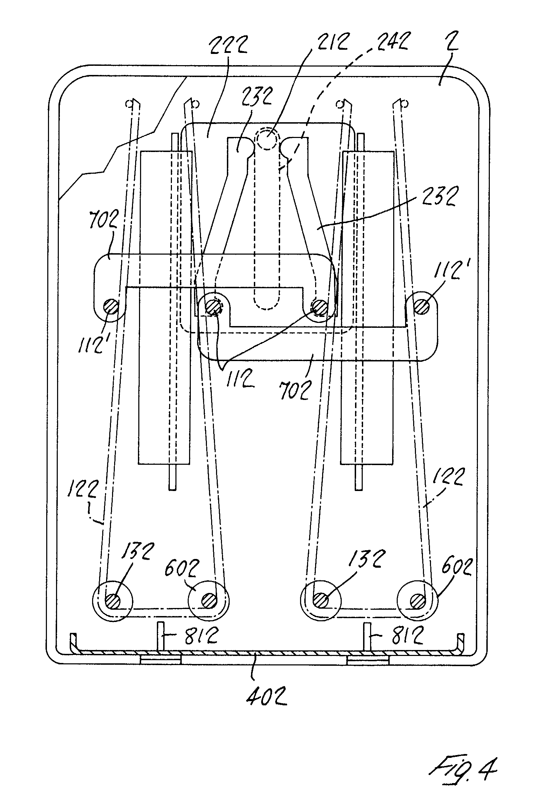

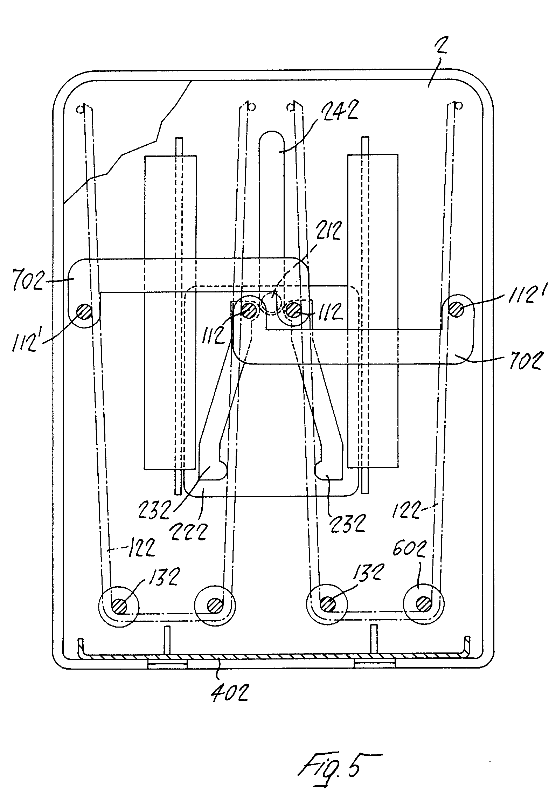

The section seen in Figure 4 shows more clearly the connection between the arms of the pairs of jaws 102 and the plate 222, which act in connection with the knob 202. As already indicated, the inner arms 112 of each pair of jaws 102 are inserted, at the end nearest the sliding wall 2, through the cam guides 232 of the plate 222, and each is connected to the respective outer arm 112' of the other pair of jaws by the connecting link 702. As will be observed from the corresponding Figure 5, a downward movement of the rod 212 attached to the knob 202 and integral with the plate 222 causes the ends of the arms 112 to slide in the cam guides 232, and the pairs of jaws 102 open in consequence.

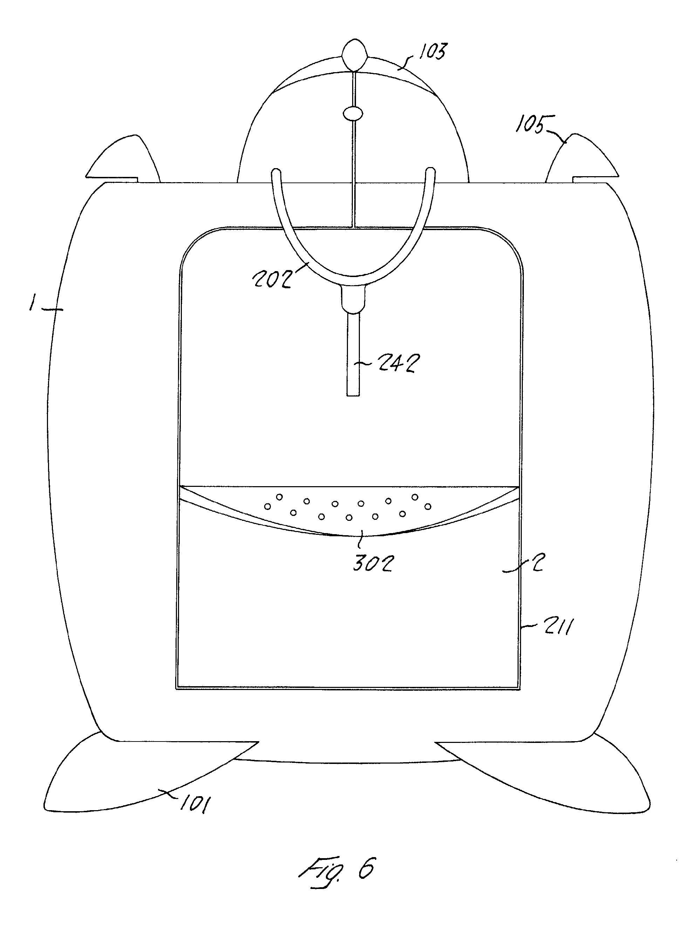

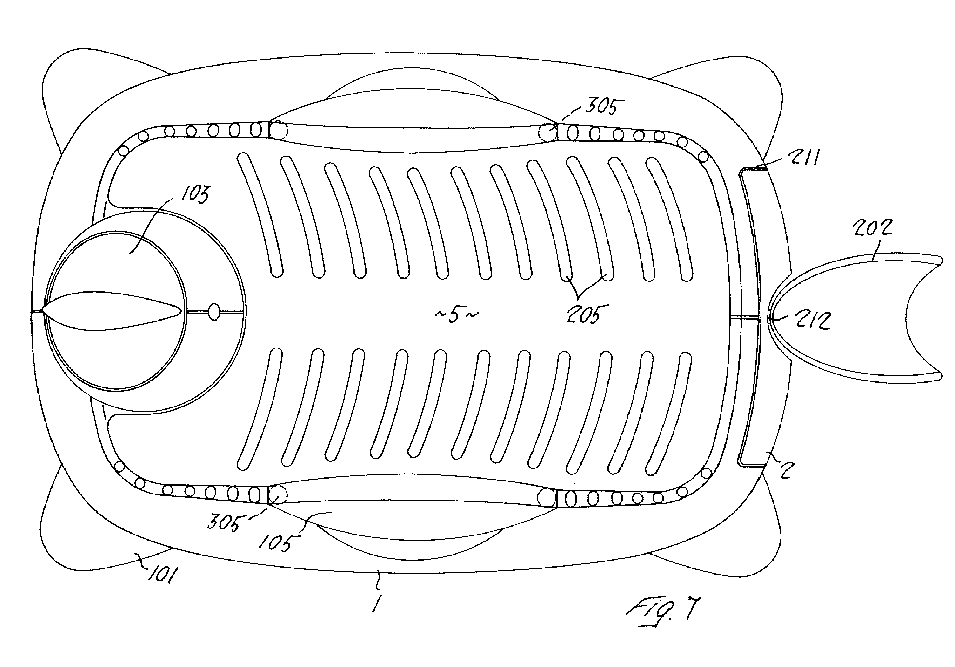

Shown more clearly in Figure 6 is the positioning of the knob 202 on the sliding wall, in front of the slot 242 through which the rod of the said knob passes. Finally, Figure 7 gives a better view of the tray 5 placed on top of the boxlike body 1, over the top wall 221 of the toasting chamber 201.

The operation of the electric toaster of the present invention will be explained below. As described earlier, the toaster of the invention has a boxlike body in which is formed a toasting chamber 201 with heating means, that is the side heating plates 401 and central heating plate 501. Products to be toasted inside the chamber 201 are placed in the jaws 102, which are supported by the pull-out wall 2 and the crumb collector 402 integral with the said wall 2. Products are inserted and removed through the opening 211 formed in one side of the boxlike body 1. The dissipation of heat from the toasting chamber 201 is thus controlled more effectively, and hence the corresponding consumption of power is kept down. Furthermore, the pull-out wall 2, as can be seen in Figure 4 of the drawings, closes the opening almost hermetically, further reducing heat losses.

The hot air generated inside the chamber 201 can advantageously be made use of through the openings 231 formed in the top wall 221 of the chamber and communicating with the exterior. The tray 5 placed on top of this wall can carry food for warming or cooking. The tray 5 can be removed and has handles 105; the feet 305 by which it stands on the wall 221 are made of an insulating material to avoid direct contact between the tray 5 and the said wall 221, and potential overheating of the tray 5. The presence of the slots 205 in the surface of the tray 5 permits direct contact between food placed on the tray and the hot air emerging from the toasting chamber 201.

In Figures 1 and 3 it is clear that the pairs of jaws 102 are built into the drawer member formed by the pull-out wall 2 and crumb collector 402. Specifically, those arms 112 of the two pairs of jaws which are nearest the central axis of the chamber 201, and therefore nearest the central plate 501, are each connected to the respective outer arm 112' of the other pair of jaws by a respective connecting link 702. The end of each of the said inner arms 112 is inserted in the manner described earlier through the respective cam guide 232 of the plate 222. Downward movement of the knob 202, and hence of the plate 222 connected to it by the rod 212, causes, as shown in Figure 5, the pairs of jaws 102 to open, thereby allowing the toasted product to be removed. The complete assembly connected to the sliding wall 2 can be washed in a dishwasher, and the crumb tray 402 can be removed from the cavity 312, which houses one end thereof, and can thus easily be washed, repaired or replaced.

## Claims

1. Electric toaster comprising an essentially boxlike body (1) with at least one opening (211) communicating with a toasting chamber (201) equipped with heating means (401,501), and means for inserting and removing (102,2,402) the product to be toasted, which toaster is **characterized in that** the said aperture (211) is made in a side wall of the said boxlike body (1).

2. Toaster according to Claim 1, in which the said means for inserting and removing the product to be toasted comprise one or more pairs of jaws (102) supported by a drawer member (2,402) that fits through the said opening (211).

3. Toaster according to Claim 2, in which each of the said pairs of jaws comprises two arms (112, 112') connected to a grid component (122,132) of essentially trapezoidal section.

4. Toaster according to Claim 2, in which the said drawer member comprises a side wall (2) that pulls out from the said boxlike body (1), and a shelf (402) connected to and projecting from the said wall (2) and situated close to the bottom wall (251) of the said toasting chamber (201).

5. Toaster according to Claim 4, in which the said shelf (402) is connected removably to the said pull-out wall (2).

6. Toaster according to any one of Claims 3 to 5, in which there are at least two juxtaposed pairs of jaws located in the said drawer member (2,402) and arranged with their arms (112,112') oriented parallel to the longitudinal axis of the boxlike body (1).

7. Toaster according to Claim 6, in which the arms (112) nearest the centre of the toasting chamber (201), of each of the two pairs of jaws (102), are respectively connected to the outer arm (112') of the other pair of jaws by a respective connecting link (702), while the end of each of the said inner arms (112) that are nearest the said pull-out side wall (2) is inserted in a cam guide (232) formed on a plate (222) that slides inside the said wall (2), the said plate being connected by a rod (212) through a slot (242) in the outer face of the said wall (2) to manual actuation means (202).

8. Toaster according to any one of the preceding claims, **characterized in that** the top wall (221) of the said toasting chamber (201) contains one or more openings (231) in communication with the exterior, a removable tray (5) made of heat-conducting material and preferably with a plurality of slots (205) in its surface being placed on the corresponding face of the boxlike body (1).

9. Toaster according to Claim 8, in which the said tray is provided with handle means (105) and thermally insulating support means (305).
